# EUROPEAN PATENT APPLICATION

(11) **EP 2 919 529 A1**
(43) Date of publication of application: **16.09.2015**
(21) Application number: 13858519.5
(22) Date of filing: 02.12.2013
(51) Int. Cl.: H04W 48/18

(54) **METHOD, APPARATUS AND SYSTEM FOR SELECTING UE ACCESS NETWORK AND UE**

(30) Priority: 30.11.2012 CN 201210504344
(71) Applicant: ZTE Corporation, Shenzhen, Guangdong 518057 (CN)
(72) Inventor: YIN, Weihai, Shenzhen Guangdong 518057 (CN); ZHAN, Yajun, Shenzhen Guangdong 518057 (CN); CHEN, Zhenqing, Shenzhen Guangdong 518057 (CN)
(74) Representative: Benson, Christopher
(86) International application number: PCT/CN2013/088335
(87) International publication number: WO 2014/082603

(57) **Abstract**

A method, apparatus and system for a UE selecting an access network, and a UE are disclosed. The method includes: a Network Selection Policy analysis System (NSPS) determining a network selection policy according to a current network state; and the NSPS sending the determined network selection policy to the UE, so as to notify the UE to perform access network selection according to the network selection policy. In the embodiments of the present invention, a problem in the related art that optimized access network selection for the terminal cannot be performed is effectively solved, which makes the terminal obtain a high-quality network, increases a service processing speed of the terminal, and improves the experience of the terminal user.

## Description

### Technical Field

The present invention relates to the field of mobile communication, and particularly, to a method, apparatus and system for a UE selecting an access network, and a UE.

### Background of the Related Art

In the wireless communication technology, various systems have been formed after development for many years, all technologies have their own advantages and disadvantages, and most evolution modes thereof are mutually independent. Under the influence of objective factors such as operation maintenance and user habits and so on, a multi-access network environment in which various technologies coexist is inevitable at present and for quite some time to come.

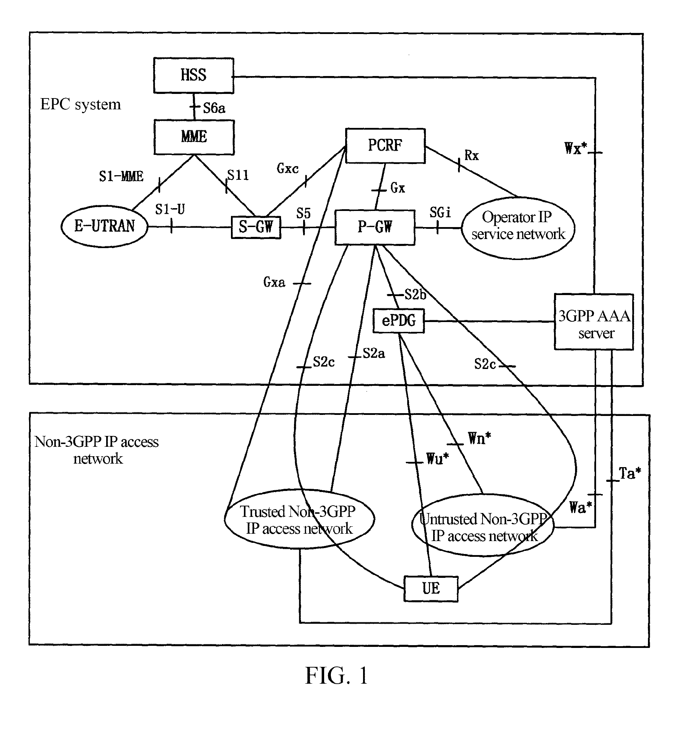

The 3rd Generation Partnership Project (3GPP) standard organization has described a converged network in detail, and FIG. 1 shows an Evolved Packet System (EPS) converged networking architecture. As can be seen from the figure, besides supporting the 2G/3G/LTE access ways within the 3GPP, the EPS also supports the Non-3GPP, such as the Worldwide Interoperability for Microwave Access (Wimax), Wireless Local Area Networks (WLAN) and Code Division Multiple Access (CDMA) access ways. The Non-3GPP access network therein can be divided into two ways: a trust way and a non-trust way. Either in the 3GPP or in the Non-3GPP, Packet Data Network Gateways (PGW) in the EPS system serve as anchor points for accessing.

In a converged multi-access network environment, with regard to which kind of network a User Equipment (UE) wishes to access or which kind of network an operator wishes the terminal to access, how to judge and select becomes a problem required to be solved. On the one hand, the user wishes that he/she can experience the best network applications after the terminal accesses a certain or multiple networks; and on the other hand, the operators wish that the terminal can access according to its own network planning, so as to avoid the network congestion or achieve the benefit maximization.

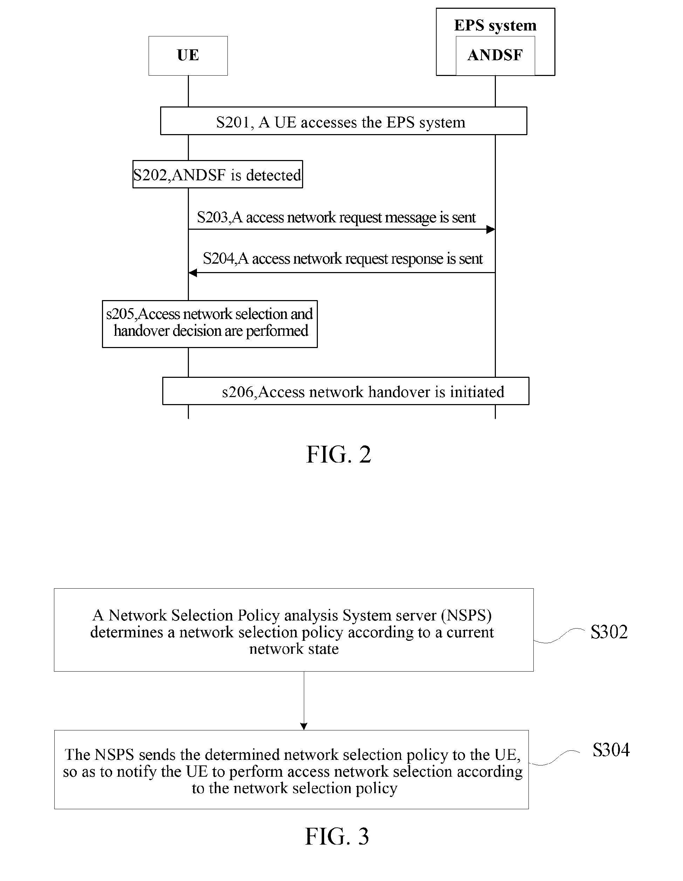

At present, with regard to the problem of network selection, descriptions related to Access Network Discovery support Functions (ANDSF) of the 3GPP TS24.312 are made, and a general flow thereof is as shown in FIG. 2, which comprises the following steps. In step S201, a UE accesses an EPS system. In step S202, the UE detects an ANDSF. In step S203, the UE sends an access network request message. In step S204, the ANDSF sends an access network request response. In step S205, the UE performs access network selection and handover decision. In step S206, the UE initiates an access network handover. As seen from the latest standard/proposal cases, the ANDSF better supports the handover between the 3GPP and the Non-3GPP and between the Non-3GPPs, but the handover between systems within the 3GPP are not described particularly. It may be that cases such as handover delay and access technology are considered in the 3GPP, thus the handover within the 3GPP in the EPS system evolves separately. Moreover, an ANDSF policy belongs to a static configuration, after the network is changed dynamically, the user cannot sense the network condition in time, and thus cases that a network preferably selected by the terminal is unavailable or repeated access is failed or it is to access a network which has been in a congestion state may occur.

With respect to the problem in the related art that optimized access network selection for the terminal cannot be performed, no effective solution has been proposed at present.

### Summary of the Invention

The present invention provides a method, apparatus and system for a UE selecting an access network, and a UE, to solve the problem in the related art that optimized access network selection for the terminal cannot be performed.

According to an aspect of the present invention, a method for a User Equipment (UE) selecting an access network is provided, comprising: a Network Selection Policy analysis System (NSPS) determining a network selection policy according to a current network state; and the NSPS sending the determined network selection policy to the UE, so as to notify the UE to perform access network selection according to the network selection policy.

Preferably, the NSPS determining the network selection policy according to the current network state comprises: the NSPS receiving a network selection policy request sent by the UE; the NSPS determining a corresponding processing policy according to the received network selection policy request, wherein, the processing policy comprises a first processing policy and/or a second processing policy, the first processing policy is used for indicating the UE to perform network handover, and the second processing policy is used for indicating the UE to perform service flow migration; and the NSPS determining a corresponding network selection policy according to the determined processing policy.

Preferably, the network selection policy request sent by the UE comprises network information of a location in which the UE is located currently, and when the processing policy is the first processing policy, the NSPS determining the corresponding network selection policy according to the determined processing policy comprises: the NSPS acquiring the network information of the location in which the UE is located in the network selection policy request; the NSPS acquiring current running states of various networks from a Network State Analysis System (NSAS); the NSPS generating an available network location list according to the acquired network information of the location in which the UE is located and the running states of various networks, wherein, the available network location list contains information of networks available to the UE currently; and the NSPS sending the generated available network location list to the UE, so as to notify the UE to perform access network selection according to the available network location list.

Preferably, the network selection policy request sent by the UE comprises network information of a location in which the UE is located currently and identity information of the UE, and when the processing policy is the second processing policy, the NSPS determining the network selection policy according to the determined processing policy comprises: the NSPS acquiring the network information of the current location of the UE and the identity information of the UE in the network selection policy request; the NSPS acquiring current running states of various networks from an NSAS; the NSPS sending the acquired network information of the location in which the UE is located, the identity information of the UE and the running states of various networks to a Policy and Charging Rules Function (PCRF) server, so as to acquire a corresponding network selection policy, wherein, according to the network information of the current location of the UE, the identity information of the UE, the running states of various networks and Quality of Service (Qos) information corresponding to the identity information of the UE, the PCRF server generates a network selection policy for controlling the UE to perform service flow migration, and returns the generated network selection policy to the NSPS; and the NSPS receiving the network selection policy sent by the PCRF server, and sending the received network selection policy to the UE, so as to notify the UE to perform data service flow migration according to the network selection policy.

Preferably, in a process of the UE performing service flow migration, links of uplink and downlink service flows keep consistent.

Preferably, after notifying the UE to perform data service flow migration according to the network selection policy, the method further comprises: the NSPS receiving a request sent by the UE for exiting one or more of networks in which the UE is located currently; and in response to the request, the NSPS deleting policies corresponding to the one or more networks in which the UE is located currently, and controlling the UE to exit said one or more of the networks in which the UE is located currently.

Preferably, after the NSPS sends the determined network selection policy to the UE, so as to notify the UE to perform access network selection according to the network selection policy, the method further comprises: the NSPS receiving actual network access information of the UE reported by the UE according to a predetermined period.

Preferably, before the NSPS receives the actual network access information of the UE reported by the UE according to the predetermined period, the method further comprises: the NSPS establishing a user session for storing the received actual network access information of the UE reported by the UE according to the predetermined period, and performing updating according to the reporting of the UE.

Preferably, after the NSPS receives the actual network access information of the UE reported by the UE according to the predetermined period, the method further comprises: the NSPS judging whether network congestion occurs according to judgment information, wherein, the judgment information comprises at least one of: the received actual network access information of the UE reported by the UE, the running states of various networks acquired from the NSAS, and the Qos information corresponding to the identity information of the UE; upon judging that the network congestion occurs, the NSPS triggering the UE to send the network selection policy request to the NSPS; and in response to the network selection policy request, the NSPS determining a network selection policy according to a priority of the UE.

According to another aspect of the present invention, an apparatus for a User Equipment (UE) selecting an access network is provided, comprising: a Network Selection Policy analysis System (NSPS), configured to: determine a network selection policy according to a current network state, and send the determined network selection policy to the UE, so as to notify the UE to perform access network selection according to the network selection policy.

Preferably, the NSPS comprises: a first receiving unit, configured to: receive a network selection policy request sent by the UE; a first determination unit, configured to: determine a corresponding processing policy according to the network selection policy request received by the first receiving unit, wherein, the processing policy comprises a first processing policy and/or a second processing policy, the first processing policy is used for indicating the UE to perform network handover, and the second processing policy is used for indicating the UE to perform service flow migration; and a second determination unit, configured to: determine a corresponding network selection policy according to the processing policy determined by the first determination unit.

Preferably, the network selection policy request sent by the UE comprises network information of a location in which the UE is located currently, and the second determination unit comprises: a first acquisition module, configured to: when the processing policy determined by the first determination unit is the first processing policy, acquire the network information of the location in which the UE is located in the network selection policy request; a second acquisition module, configured to: when the processing policy determined by the first determination unit is the first processing policy, acquire current running states of various networks from a Network State Analysis System (NSAS); a first generation module, configured to: generate an available network location list according to the network information of the location in which the UE is located acquired by the first acquisition module and the running states of various networks acquired by the second acquisition module, wherein, the available network location list contains information of networks available to the UE currently; and a first sending module, configured to: send the available network location list generated by the first generation module to the UE, so as to notify the UE to perform access network selection according to the available network location list.

Preferably, the network selection policy request sent by the UE comprises network information of a location in which the UE is located currently and identity information of the UE, and the second determination unit comprises: a third acquisition module, configured to: when the processing policy determined by the first determination unit is the second processing policy, acquire the network information of the current location of the UE and the identity information of the UE in the network selection policy request; a fourth acquisition module, configured to: when the processing policy determined by the first determination unit is the second processing policy, acquire current running states of various networks from the NSAS; a second generation module, configured to: send the network information of the location in which the UE is located and the identity information of the UE acquired by the third acquisition module and the running states of various networks acquired by the fourth acquisition module to a Policy and Charging Rules Function (PCRF) server, so as to generate a corresponding network selection policy, wherein, according to the network information of the current location of the UE, the identity information of the UE, the running states of various networks and Quality of Service (Qos) information corresponding to the identity information of the UE, the PCRF server generates a network selection policy for controlling the UE to perform service flow migration, and returns the generated network selection policy to the NSPS; and a second sending module, configured to: receive the network selection policy sent by the PCRF server, and send the received network selection policy to the UE, so as to notify the UE to perform data service flow migration according to the network selection policy.

Preferably, the NSPS further comprises: a second receiving unit, configured to: after the second sending module notifies the UE to perform service flow migration according to the network selection policy, receive a request sent by the UE for exiting one or more of networks in which the UE is located currently; and a response unit, configured to: in response to the request received by the second receiving unit, delete policies corresponding to the one or more networks in which the UE is located currently, and control the UE to exit said one or more of the networks in which the UE is located currently.

Preferably, the NSPS further comprises: a third receiving unit, configured to: after the NSPS notifies the UE to perform access network selection according to the network selection policy, receive actual network access information of the UE reported by the UE according to a predetermined period.

Preferably, the NSPS further comprises: an establishment unit, configured to: before the third receiving unit receives the actual network access information of the UE reported by the UE according to the predetermined period, establish a user session for storing the received actual network access information of the UE reported by the UE according to the predetermined period, and perform updating according to the reporting of the UE.

Preferably, the NSPS further comprises: a judgment unit, configured to: after the third receiving unit receives the actual network access information of the UE reported by the UE according to the predetermined period, judge whether network congestion occurs according to judgment information, wherein, the judgment information comprises at least one of: the received actual network access information of the UE reported by the UE, the running states of various networks acquired from the NSAS, and the Qos information corresponding to the identity information of the UE; a triggering unit, configured to: when the judgment unit judges that the network congestion occurs, trigger the UE to send the network selection policy request to the NSPS; and a third determination unit, configured to: in response to the network selection policy request triggered by the triggering unit, determine a network selection policy according to a priority of the UE.

According to another aspect of the present invention, a User Equipment (UE) is provided, comprising: a fourth receiving unit, configured to: receive a network selection policy sent by a Network Selection Policy analysis System (NSPS), wherein, the NSPS determines the network selection policy according to a current network state, and the network selection policy comprises at least one of: a policy of controlling the UE to perform network handover and a policy of controlling the UE to execute service flow migration; and a first execution unit, configured to: execute the network selection policy received by the fourth receiving unit.

Preferably, a first sending unit is configured to: send a network selection policy request to the NSPS, so as to trigger the network selection policy sent by the NSPS, wherein, the network selection policy request comprises: network information of a location in which the UE is located currently and identity information of the UE.

Preferably, the fourth receiving unit comprises: a first receiving module, configured to: receive an available network location list sent by the NSPS, wherein, the available network location list is an available network location list generated by the NSPS according to the acquired network information of the location in which the UE is located and running states of various networks, and the available network location list contains information of networks available to the UE currently; and the first execution unit comprises: a first execution module, configured to: perform network handover according to the network location list acquired by the first receiving module.

Preferably, the fourth receiving unit comprises: a second receiving module, configured to: receive a network selection policy for controlling the UE to perform data service flow migration sent by the NSPS; and the first execution unit comprises: a second execution module, configured to: perform data service flow migration according to the network selection policy acquired by the second receiving module.

Preferably, a second sending unit is configured to: send a request of exiting one or more networks in which the UE is located currently; and an exit unit is configured to: exit said one or more networks in which the UE is located currently.

Preferably, an information reporting unit is configured to: report actual network access information of the UE according to a predetermined period.

According to another aspect of the present invention, a system for a User Equipment (UE) selecting an access network is provided, comprising: a Packet data network Gateway (PGW), a Policy and Charging Rules Function (PCRF) server, a Network State Analysis System (NSAS), the apparatus for the UE selecting the access network according to any of claims 12 to 22 and the UE according to any of claims 23 to 29, wherein, the PGW is configured to: in cooperation with the UE and the NSPS respectively, complete data interaction between the UE and an NSPS; the PCRF server is connected with the PGW; the NSPS is connected with the PCRF server; and the NSAS is connected with the PGW and the NSPS respectively.

The beneficial effects of the embodiments of the present invention are described as follows.

In the embodiments of the present invention, when the terminal performs access network selection, firstly the current network state is acquired, and a corresponding network selection policy is made according to information of the network state. By such means of controlling the access network selection of the terminal according to the current network state, it enables a terminal user to obtain a preferable network in the access network selection, which effectively solves the problem in the related art that optimized access network selection for the terminal cannot be performed, makes the terminal obtain the high-quality network, increases the service processing speed of the terminal, and further improves the experience of the terminal user.

### Brief Description of Drawings

FIG. 1 is a diagram of EPS converged networking architecture in the related art.
FIG. 2 is a flow chart of a UE performing network handover in the related art.
FIG. 3 is a preferable flow chart of a method for a UE selecting an access network according to an embodiment of the present invention.
FIG. 4 is a preferable structural block diagram of an NSPS of an apparatus for a UE selecting an access network according to an embodiment of the present invention.
FIG. 5 is another preferable structural block diagram of an NSPS of an apparatus for the UE selecting an access network according to an embodiment of the present invention.
FIG. 6 is another preferable structural block diagram of an NSPS of an apparatus for the UE selecting an access network according to an embodiment of the present invention.
FIG. 7 is a preferable structural block diagram of a UE according to an embodiment of the present invention.
FIG. 8 is another preferable structural block diagram of a UE according to an embodiment of the present invention.
FIG. 9 is a framework diagram of a system for a UE selecting an access network according to an embodiment of the present invention.
FIG. 10 is a preferable schematic diagram of operation of a system for a UE selecting an access network according to an embodiment of the present invention.
FIG. 11 is another preferable schematic diagram of operation of a system for a UE selecting an access network according to an embodiment of the present invention.
FIG. 12 is another preferable schematic diagram of operation of a system for a UE selecting an access network according to an embodiment of the present invention.
FIG. 13 is another preferable schematic diagram of operation of a system for a UE selecting an access network according to an embodiment of the present invention.

### Preferred Embodiments of the Invention

In order to solve the problem in the related art that optimized access network selection for the terminal cannot be performed, the present invention provides a method, apparatus and system for a UE selecting an access network, and a UE. The present invention will be described in detail below with reference to the accompanying drawings and in conjunction with embodiments. It should be noted that the embodiments in the present application and the features in the embodiments can be combined with each other without conflict.

### Embodiment 1

The preferable embodiment of the present invention provides a method for a UE selecting an access network, and FIG. 3 shows a preferable flow chart of the method. As shown in FIG. 3, the method includes the following steps.

In step S302, a Network Selection Policy analysis System (NSPS) determines a network selection policy according to a current network state.

Specifically, the above NSPS is a network selection policy analysis system server, which is called NSPS for short and used for performing analysis of the policy selected by the terminal. When the terminal needs to perform access network selection, the NSPS performs analysis according to the current performance state of the network, and determines a network selection policy, so that the terminal can access a preferable network. Preferably, after the NSPS determines the network selection policy according to the current network state, a connection is established between the UE and the NSPS. Preferably, data interaction between the UE and the NSPS can be completed through a PGW.

In step S304, the NSPS sends the determined network selection policy to the UE, so as to notify the UE to perform access network selection according to the network selection policy.

After determining a corresponding network selection policy according to the current network state, the NSPS sends the network selection policy to a terminal UE which is required to perform access network selection, and the UE receives the network selection policy determined by the NSPS, and executes a corresponding action to complete the access network selection.

In the above preferable implementation, when the terminal performs access network selection, firstly the current network state is acquired, and a corresponding network selection policy is made according to information of the network state. By such means of controlling the access network selection of the terminal according to the current network state, it enables a terminal user to obtain a preferable network in the access network selection, which effectively solves the problem in the related art that optimized access network selection for the terminal cannot be performed, makes the terminal obtain the high-quality network, increases the service processing speed of the terminal, and further improves the experience of the terminal user.

In a preferable implementation of the present invention, a method for the above NSPS determining a network selection policy according to the current network state is also provided, and the method includes the following steps: the NSPS receiving a network selection policy request sent by the UE; the NSPS determining a corresponding processing policy according to the received network selection policy request, wherein, the processing policy includes a first processing policy and/or a second processing policy, the first processing policy is used for indicating the UE to perform network handover, and the second processing policy is used for indicating the UE to perform service flow migration; and the NSPS determining a corresponding network selection policy according to the determined processing policy.

In the above preferable implementation, two preferable processing policies are provided according different conditions of the current network state, one processing policy is a network handover policy, that is, the network which the UE accesses currently is switched to another high-quality network different from the network, so as to guarantee that services of the terminal proceed smoothly; and the other processing policy is a data service flow migration policy, that is, different services of the terminal are distributed to different networks to be processed, for example, a part of service flows of the terminal is processed by a 3G network, and another part of service flows is processed by a wifi network, and the pressure of the network which the terminal accesses currently can be relieved with such processing policy, thereby increasing the processing speed.

In an implementation of the present invention, the above method is also optimized. Specifically, when the processing policy is the first processing policy, the NSPS determining the corresponding network selection policy according to the determined processing policy includes: the NSPS acquiring the network information of the location in which the UE is located in the network selection policy request, wherein, the network selection policy request sent by the UE includes the network information of the location in which the UE is located currently; the NSPS acquiring current running states of various networks from a Network State Analysis System (NSAS), wherein, the above NSAS is a network state analysis system server, which is called NSAS for short and used for acquiring the states of various networks; the NSPS generating an available network location list according to the acquired network information of the location in which the UE is located and the running states of various networks, wherein, the available network location list contains information of networks available to the UE currently; and the NSPS sending the generated available network location list to the UE, so as to notify the UE to perform access network selection according to the available network location list.

In an implementation of the present invention, the above method is also optimized. Specifically, when the processing policy is the second processing policy, the NSPS determining the network selection policy according to the determined processing policy includes: the NSPS acquiring the network information of the current location of the UE and the identity information of the UE in the network selection policy request, wherein, the sent network selection policy request includes the network information of the location in which the UE is located currently and the identity information of the UE; the NSPS acquiring current running states of various networks from the Network State Analysis System (NSAS); the NSPS sending the acquired network information of the location in which the UE is located, the identity information of the UE and the running states of various networks to a Policy and Charging Rules Function (PCRF) server, so as to acquire a corresponding network selection policy, wherein, according to the network information of the current location of the UE, the identity information of the UE, the running states of various networks and Qos information corresponding to the identity information of the UE, the PCRF server generates a network selection policy for controlling the UE to perform service flow migration, and returns the generated network selection policy to the NSPS; and the NSPS receiving the network selection policy sent by the PCRF server, and sending the received network selection policy to the UE, so as to notify the UE to perform data service flow migration according to the network selection policy.

Preferably, when the above UE performs service flow migration, links of uplink and downlink service flows keep consistent.

In a preferable implementation of the present invention, the above method is also optimized Specifically, after notifying the UE to perform data service flow migration according to the network selection policy, it also includes: the NSPS receiving a request sent by the UE for exiting one or more of networks in which the UE is located currently; and in response to the request, the NSPS deleting policies corresponding to the one or more networks in which the UE is located currently, and controlling the UE to exit said one or more of the networks in which the UE is located currently.

In the above preferable implementation, in the process of performing service distribution, the UE can send the request for exiting one or more of the networks in which the UE is located currently. Preferably, when the UE detects that signals of one or more of the networks which the UE accesses currently attenuate to a certain threshold, the UE is triggered to send an exit request. After the NSPS responds to the request, the NSPS deletes policies corresponding to one or more networks in which the UE is located currently, and controls the UE to exit said one or more of the networks in which the UE is located currently. By the implementation of the above preferable scheme, it is guaranteed that the UE can access a high-quality network and further achieve the optimized network selection.

Preferably, the UE reports its actual network access information to the NSPS at predetermined intervals, and the NSPS receives the actual network access information of the UE reported by the UE according to a predetermined period, establishes a user session for storing the received actual network access information of the UE reported by the UE according to the predetermined period, and perform updating according to the reporting of the UE. When it is judged that congestion occurs in the network of the UE, a related network selection policy is made, and the access network of the UE is optimized. Specifically, the NSPS judges whether network congestion occurs according to judgment information, wherein, the judgment information includes at least one of: the received actual network access information of the UE reported by the UE, the running states of various networks acquired from the NSAS, and the Qos information corresponding to the identity information of the UE; upon judging that the network congestion occurs, the NSPS triggers the UE to send a network selection policy request to the NSPS; and in response to the network selection policy request, the NSPS determines a network selection policy according to a priority of the UE, for example, it is to control the UE to perform network handover or control the UE to perform service flow migration.

In the above preferable implementation, the network access information of the UE is acquired and updated at predetermined intevals, the network of the UE is detected, and the related network selection policy is made according to the network access information of the UE, which guarantees that the UE always accesses an efficient and high-quality network.

### Embodiment 2

Based on the method for a UE selecting an access network provided above, the preferable embodiment provides an apparatus a the UE selecting an access network, the apparatus comprising: a Network Selection Policy analysis System (NSPS), configured to: determine a network selection policy according to the current network state, and send the determined network selection policy to the UE, so as to notify the UE to perform access network selection according to the network selection policy.

Specifically, the above NSPS is a network selection policy analysis system server, which is configured to perform analysis of the policy selected by the terminal. When the terminal needs to perform access network selection, the NSPS performs analysis according to the current performance state of the network, and determines a network selection policy, so that the terminal can access a preferable network. Preferably, after the NSPS determines the network selection policy according to the current network state, a connection is established between the UE and the NSPS. Preferably, data interaction between the UE and the NSPS can be completed through a PGW. After determining a corresponding network selection policy according to the current network state, the NSPS sends the network selection policy to a terminal UE which is required to perform access network selection, and the UE receives the network selection policy determined by the NSPS, and executes a corresponding action to complete the access network selection.

In the above preferable implementaiton, when the terminal performs access network selection, firstly the current network state is acquired, and a corresponding network selection policy is made according to information of the network state. By such means of controlling the access network selection of the terminal according to the current network state, it enables a terminal user to obtain a preferable network in the access network selection, which effectively solves the problem in the related art that optimized access network selection for the terminal cannot be performed, makes the terminal obtain the high-quality network, increases the service processing speed of the terminal, and further improves the experience of the terminal user.

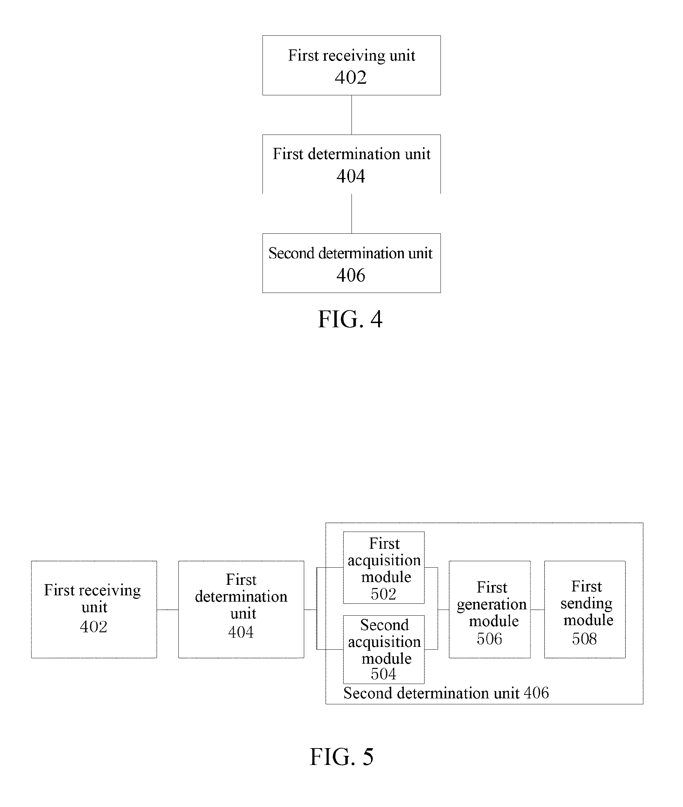

FIG. 4 shows a preferable structural block diagram of the above NSPS. As shown in FIG. 4, the NSPS includes: a first receiving unit 402, configured to: receive a network selection policy request sent by the UE; a first determination unit 404, connected with the first receiving unit 402, and configured to: determine a corresponding processing policy according to the network selection policy request received by the first receiving unit, wherein, the processing policy includes a first processing policy and/or a second processing policy, the first processing policy is used for indicating the UE to perform network handover, and the second processing policy is used for indicating the UE to perform service flow migration; and a second determination unit 406, connected with the first determination unit 404, and configured to: determine a corresponding network selection policy according to the processing policy determined by the first determination unit.

In a preferable implementation of the present invention, the network selection policy request sent by the UE includes network information of a location in which the UE is located currently. FIG. 5 shows a preferable structural block diagram of the second determination unit 406 of the present invention. As shown in FIG. 5, the second determination unit 406 includes: a first acquisition module 502, connected with the first determination unit 404, and configured to: when the processing policy determined by the first determination unit 404 is the first processing policy, acquire the network information of the location in which the UE is located in the network selection policy request; a second acquisition module 504, connected with the first determination unit 404, and configured to: when the processing policy determined by the first determination unit 404 is the first processing policy, acquire current running states of various networks from a Network State Analysis System (NSAS); a first generation module 506, connected with the first acquisition module 502 and the second acquisition module 504, and configured to: generate an available network location list according to the network information of the location in which the UE is located acquired by the first acquisition module 502 and the running states of various networks acquired by the second acquisition module 504, wherein, the available network location list contains information of networks available to the UE currently; and a first sending module 508, connected with the first generation module 506, and configured to: send the available network location list generated by the first generation module 506 to the UE, so as to notify the UE to perform access network selection according to the available network location list.

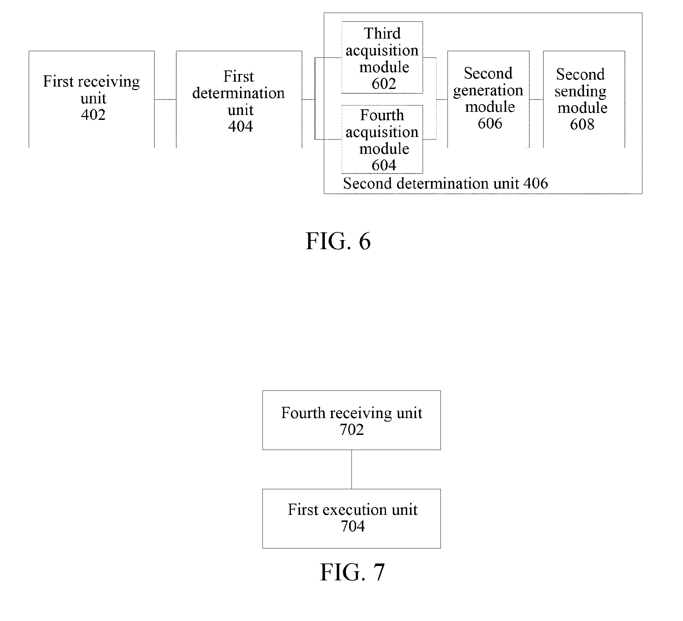

In a preferable implementation of the present invention, the network selection policy request sent by the UE includes network information of a location in which the UE is located currently and identity information of the UE. FIG. 6 shows another preferable structural block diagram of the second determination unit 406. As shown in FIG. 6, the second determination unit 406 includes: a third acquisition module 602, connected with the first determination unit 404, and configured to: when the processing policy determined by the first determination unit 404 is the second processing policy, acquire the network information of the current location of the UE and the identity information of the UE in the network selection policy request; a fourth acquisition module 604, connected with the first determination unit 404, and configured to: when the processing policy determined by the first determination unit 404 is the second processing policy, acquire current running states of various networks from the Network State Analysis System (NSAS); a second generation module 606, connected with the third acquisition module 602 and the fourth acquisition module 604 respectively, and configured to: send the network information of the location in which the UE is located and the identity information of the UE acquired by the third acquisition module 602 and the running states of various networks acquired by the fourth acquisition module 604 to a Policy and Charging Rules Function (PCRF) server, so as to generate a corresponding network selection policy, wherein, according to the network information of the current location of the UE, the identity information of the UE, the running states of various networks and Qos information corresponding to the identity information of the UE, the PCRF server generates a network selection policy for controlling the UE to perform service flow migration, and returns the generated network selection policy to the NSPS; and a second sending module 608, connected with the second generation module 606, and configured to: receive the network selection policy sent by the PCRF server, and send the received network selection policy to the UE, so as to notify the UE to perform data service flow migration according to the network selection policy.

Preferably, when the above UE performs service flow migration, links of uplink and downlink service flows keep consistent.

The scheme recited above is further optimized in the present invention. Specifically, the NSPS further includes: a second receiving unit, configured to: after the second sending module notifies the UE to perform data service flow migration according to the network selection policy, receive a request sent by the UE for exiting one or more of networks in which the UE is located currently; and a response unit, configured to: in response to the request received by the second receiving unit, delete policies corresponding to one or more networks in which the UE is located currently, and control the UE to exit said one or more of the networks in which the UE is located currently.

In the above preferable implementation, in the process of performing service distribution, the UE can send the request of exiting one or more of networks in which the UE is located currently. Preferably, when the UE detects that signals of one or more of the networks in the networks which the UE accesses currently attenuate to a certain threshold, the UE is triggered to send an exit request, and after responding to the request, the NSPS deletes policies corresponding to one or more networks in which the UE is located currently, and controls the UE to exit said one or more of the networks in which the UE is located currently. By the implementation of the above preferable scheme, it is guaranteed that the UE can access a high-quality network and further achieve the optimized network selection.

Preferably, the NSPS further includes: a third receiving unit, configured to: after the NSPS notifies the UE to perform access network selection according to the network selection policy, receive actual network access information of the UE reported by the UE according to a predetermined period; an establishment unit, configured to: before the third receiving unit receives the actual network access information of the UE reported by the UE according to the predetermined period, establish a user session for storing the received actual network access information of the UE reported by the UE according to the predetermined period, and perform updating according to the reporting of the UE.

Preferably, the NSPS further includes: a judgment unit, configured to: after the third receiving unit receives the actual network access information of the UE reported by the UE according to the predetermined period, judge whether network congestion occurs according to judgment information, wherein, the judgment information includes at least one of: the received actual network access information of the UE reported by the UE, the running states of various networks acquired from the NSAS, and the Qos information corresponding to the identity information of the UE; a triggering unit, configured to: when the judgment unit judges that the network congestion occurs, trigger the UE to send the network selection policy request to the NSPS; and a third determination unit, configured to: in response to the network selection policy request triggered by the triggering unit, determine a network selection policy according to a priority of the UE. Preferably, the priority of the UE can be determined according to the Qos information.

### Embodiment 3

Based on the above method and apparatus for a UE selecting an access network provided above, the preferable embodiment provides a UE. FIG. 7 shows a preferable structural block diagram of the UE. As shown in FIG. 7, the UE includes: a fourth receiving unit 702, configured to: receive a network selection policy sent by a Network Selection Policy analysis System (NSPS), wherein, the NSPS determines the network selection policy according to the current network state, and the network selection policy includes at least one of: a policy of controlling the UE to perform network handover and a policy of controlling the UE to execute service flow migration; and a first execution unit 704, connected with the fourth receiving unit 702, and configured to: execute the network selection policy received by the fourth receiving unit 702. By improving the UE, it enables the UE to identify the network selection policy made by the NSPS according to the network state, and execute the policy, so as to complete the optimized access network selection of the terminal UE.

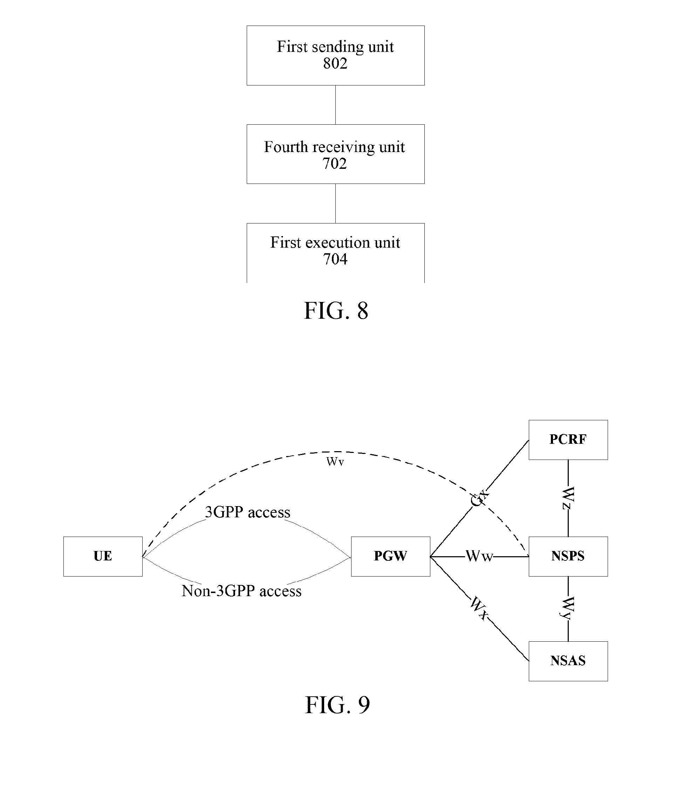

In addition, as shown in FIG. 8, the above UE further includes a first sending unit 802, connected with the fourth receiving unit 702, and configured to: send a network selection policy request to the NSPS, so as to trigger the network selection policy sent by the NSPS, wherein, the network selection policy request includes: network information of a location in which the UE is located currently and identity information of the UE.

In a preferable implementation of the present invention, the fourth receiving unit of the UE includes: a first receiving module, configured to: receive an available network location list sent by the NSPS, wherein, the available network location list is an available network location list generated by the NSPS according to the acquired network information of the location in which the UE is located and running states of various networks, and the available network location list contains information of networks available to the UE currently; and the first execution unit includes: a first execution module, configured to: perform network handover according to the network location list acquired by the first receiving module. By the implementation of the above preferable scheme, it is guaranteed that the UE can achieve the network handover operation.

In a preferable implementation of the present invention, the fourth receiving unit of the UE includes: a second receiving module, configured to: receive a network selection policy sent by the NSPS for controlling the UE to perform service flow migration; and the first execution unit includes: a second execution module, configured to: perform data service flow migration according to the network selection policy acquired by the second receiving module. By the implementation of the above preferable scheme, it is guaranteed that the UE can achieve the data service flow migration operation.

In addition, the above UE further includes: a second sending unit, configured to: send a request for exiting one or more networks in which the UE is located currently; and an exit unit, configured to: exit said one or more networks in which the UE is located currently.

In the above preferable implementation, in the process of performing service distribution, the UE can send the request for exiting one or more of networks in which the UE is located currently. Preferably, when the UE detects that signals of one or more of the networks in the networks which the UE accesses currently attenuate to a certain threshold, the UE is triggered to send an exit request, and after responding to the request, the NSPS deletes policies corresponding to one or more networks in which the UE is located currently, and controls the UE to exit one or more of the networks in which the UE is located currently. By the implementation of the above preferable scheme, it is guaranteed that the UE can access a high-quality network and further achieve the optimized network selection.

Preferably, the UE further includes: an information reporting unit, configured to: report actual network access information of the UE according to a predetermined period. By the UE reporting its network information at predetermined intervals, the NSPS makes a related policy in time according to the information reported by the UE, which further guarantees the network quality of the UE.

### Embodiment 4

Based on the contents recited in the above embodiment 1 to embodiment 3, the preferable embodiment provides a system for a UE selecting an access network. FIG. 9 shows a systematic framework diagram of the system. As shown in FIG. 9, the system for a UE selecting an access network includes a PGW, a PCRF server, a Network State Analysis System (NSAS), the apparatus for a UE selecting an access network recited in the embodiment 2 and the UE recited in the embodiment 3, wherein, the PGW is configured to: complete data interaction between the UE and an NSPS in cooperation with the UE and the NSPS respectively; the PCRF server is connected with the PGW; the NSPS is connected with the PCRF server; and the NSAS is connected with the PGW and the NSPS respectively.

As can be known from FIG. 9, the above framework diagram follows the EPS foundation architecture and supports the 3GPP and Non-3GPP access ways, and compared to the original system framework, it has the following differences.
1) The UE adds a protocol processing function of the NSPS, which can detect link qualities such as a wireless signal of the located position and an intensity level, judge networks which are available, acquire user identities such as an International Mobile Subscriber Identification Number (IMSI), and report it to the NSPS through messages.
2) The NSPS network element is added, which is used to: after receiving a policy request message of the UE, according to information such as the location of the UE and the congestion condition of each network acquired from the NSAS, generate an available network location list and bring it to the PCRF or the UE; or ask the PCRF for a distribution policy and Qos information, and finally generate a network selection policy and notify it to the UE. Wherein, the NSPS also establishes a user session to store a network selection policy and/or a handover policy and/or a distribution policy, and save the Qos information of the user, so as to distinguish a user level in the later network congestion; and the network selection policy of the user is decided by the NSPS.
3) The NSAS network element is added, which is used to: collect user service flow information, make a mass analysis, and perform feedback of the current running states of various networks in real time, and the NSAS is required to establish a user session to store history information such as user access/exit/access services.
4) A PGW-NSAS interface Wx is newly added, which is used for the PGW reporting dynamic information such as user service flow traffic to the NSAS in real time.
5) A PGW-NSPS interface Ww is newly added, which is used for the UE/NSPS network selection policy interaction, and has no special requirements on the PGW but only performs data transmission.
6) An NSPS-NSAS interface Wy is newly added, which is used for the NSPS acquiring the current network state information from the NSAS.
7) An NSPS-PCRF interface Wz is newly added, which is used for the NSPS acquiring information such as a Qos policy or a data service flow migration policy of the user from the PCRF. Wherein, the PCRF serves as the policy master control, and besides the original gating policy/ Qos policy, it also can judge and generate a network selection flow migration policy of the user. The generation of the specific policy can be judged through the available network list brought by the NSPS.
8) An NSPS-UE interface Wv is newly added, which is used for the UE/NSPS network selection policy interaction, and the interface is a virtual interface.

The working principle of the above system will be specifically described in combination with specific application scenarios below.

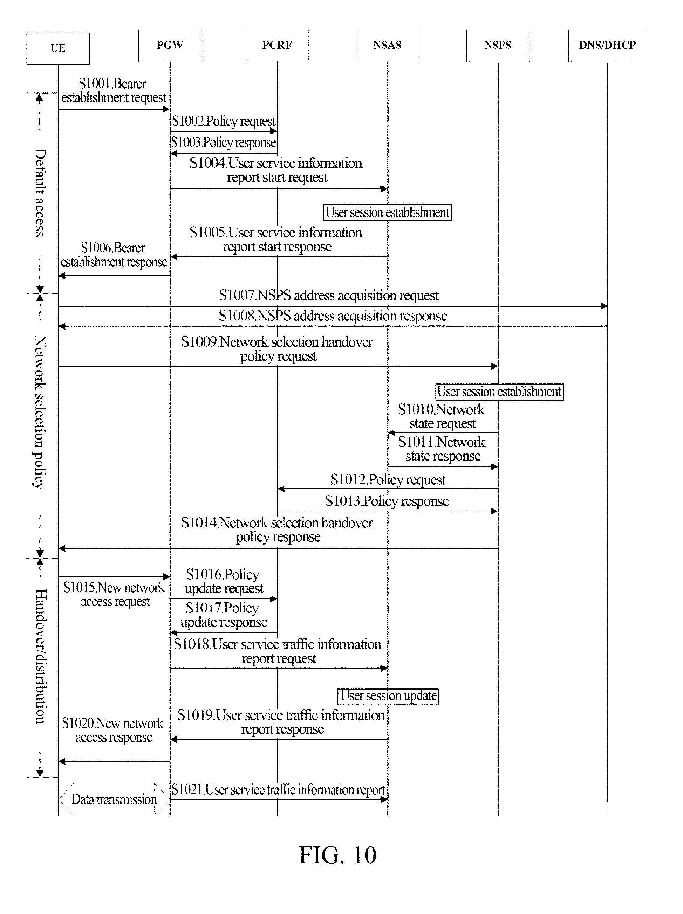

FIG. 10 shows an interaction process of performing network selection (handover/distribution) after the terminal accesses a default network, and as shown in FIG. 10, the following steps are specifically included.

In step S1001, a UE initiates a bearer request to a PGW.

In step S1002, the PGW acquires a Qos/distribution policy from a PCRF.

In step S1003, the PCRF issues the Qos/distribution policy.

In step S1004, the PGW initiates a user information report start request to an NSAS, and the NSAS establishes a user session.

In step S1005, the NSAS replies a user information report start response to the PGW.

In step S1006, the PGW replies a UE bearer establishment success response; and at this time, a default access process of the UE has been completed.

In step S1007, the UE sends an NSPS address acquisition request to a Domain Name System (DNS)/Dynamic Host Configuration Protocol (DHCP).

In step S1008, the DNS/DHCP replies an address of the NSPS to the UE.

In step S1009, the UE sends a network selection policy request to the NSPS, which carries a user identity, the current access network information and network information of the location in which the user is located. The NSPS establishes a user session, and judges whether it is network handover or service distribution.

In step S1010, the NSPS acquires a network state from the NSAS.

In step S1011, the NSAS responds the network state to the NSPS.

In step S1012, the NSPS sends a policy acquisition request to the PCRF, which carries the user identity, available location information and a network congestion condition.

In step S1013, the PCRF responds a network selection policy and Qos information to the NSPS, and the condition of the current network is considered.

In step S1014, the NSPS responds the network selection policy to the UE; and at this time, making of the network selection policy has been completed.

In step S1015, the UE initiates a new network access to the PGW.

In step S1016, the PGW acquires policy information of the new network from the PCRF.

In step S1017, the PCRF replies the policy information to the PGW.

In step S1018, the PGW reports a user service report start request to the NSAS.

In step S1019, the NSAS updates session information, and replies a user service report start response to the PGW.

In step S1020, the PGW replies a new network access success response to the UE; and at this time, the network selection has been completed according to the made network selection policy (handover or distribution).

In step S1021, the user runs data in a converged network, and the PGW periodically reports the user service information to the NSAS.

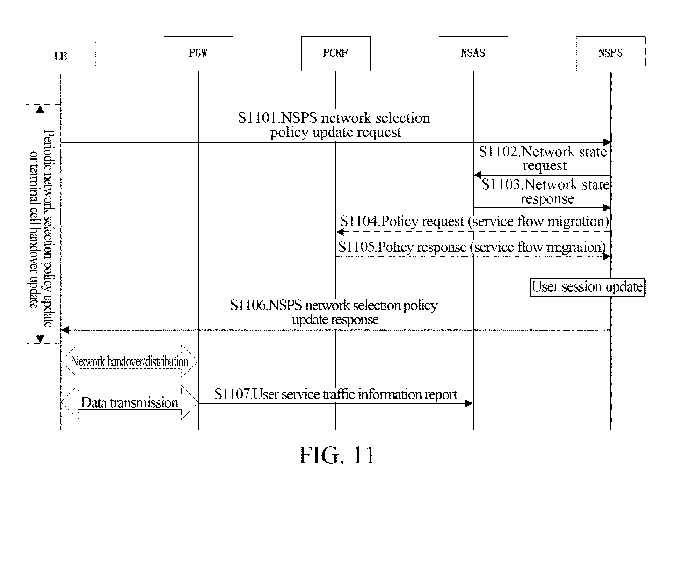

FIG. 11 shows the network selection policy updating after the terminal accesses, which can be applied to the following scenarios.
1) If the terminal performs handover and movement among different cells, the NSPS needs to be triggered to perform policy updating.
2) In order to guarantee that a network policy of an area in which the user is located currently is consistent with saving controlled by a core network, after receiving the network selection policy of the core network, the terminal may judge whether to access or not according to the actual network condition. Finally, the behavior of the UE may be inconsistent with the policy sent by the NSPS, and thus it is required that the UE periodically notifies the actual access condition of the user to the NSPS. Therefore, since the NSPS knows the current access condition of the UE in real time, when congestion occurs later in the network, the NSPS can notify which users to perform network handover or data service flow migration according to the saved user session information.

As shown in FIG. 11, the following steps are specifically included.

In step S1101, a terminal periodically updates a network selection policy to an NSPS. A UE initiates a network selection policy update request to the NSPS, and meanwhile a condition of the network which the terminal accesses currently is carried (preventing that the policy saved by the NSPS and the actual access of the UE are inconsistent), and the NSPS judges whether the user performs network handover or service distribution.

In step S1102, the NSPS acquires a network state from an NSAS.

In step S1103, the NSAS responds the network state to the NSPS.

If it is judged to perform network handover, step S1106 is executed in next step, and if it is judged to perform service distribution, step S1104 is executed in next step.

In step S1104, the NSPS sends a policy acquisition request to a PCRF, which carries a user identity, available location information and a network congestion condition.

In step S1105, the PCRF responds a policy to the NSPS, and the condition of the current network is considered.

In step S1106, the NSPS responds the network selection policy to the UE.

In step S1107, the UE initiates network handover/distribution according to the policy, runs data and reports service traffic.

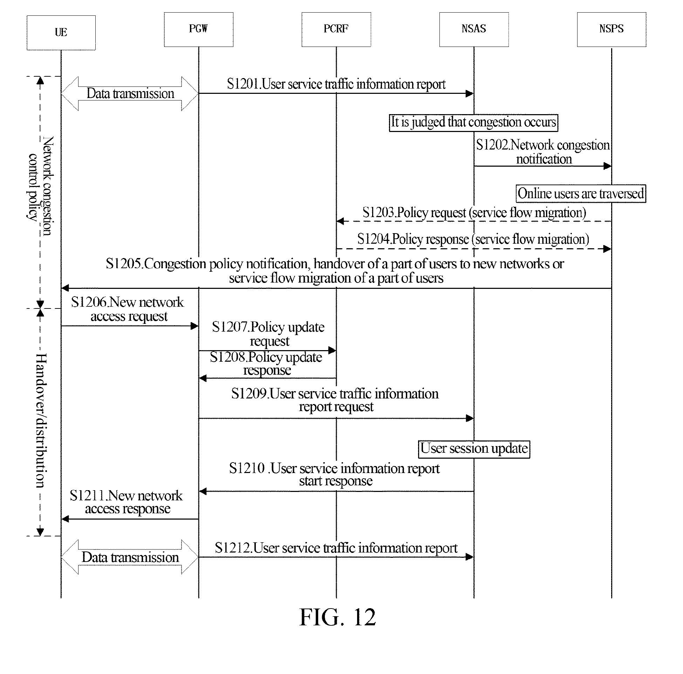

FIG. 12 shows control of the network congestion after the terminal accesses, and as shown in FIG. 12, the following steps are included.

In step S1201, when a UE runs data, a PGW reports service traffic information of the user to an NSAS in real time. The NSAS is responsible for collecting and analyzing traffic information of each user, and judging network responsibility conditions (RAT and services, etc.).

In step S1202, when congestion occurs in a certain network, the NSAS notifies the condition to an NSPS. The NSPS scans the access users, and according to Qos information, judges which users are required to perform handover or which users are required to perform migration. Wherein, if it is to perform network handover, it is not required to ask a PCRF for the policy, and step S1205 is executed in next step, and if it is to perform service distribution, it is required to acquire a distribution policy in the congestion condition from the PCRF, and step S1203 is executed in next step.

In step S1203, the NSPS sends a policy acquisition request to the PCRF.

In step S1204, the PCRF responds a policy to the NSPS.

In step S1205, the NSPS notifies the UE (a part of users) of network handover or migration of part of service flows; and at this time, making of the policy has been completed in the network congestion condition.

In step S1206, the UE initiates new network access to the PGW.

In step S1207, the PGW initiates policy request update to the PCRF.

In step S1208, the PCRF responds a policy request response to the PGW.

In step S1209, the PGW initiates a service traffic information report start request to the NSAS.

In step S1210, the NSAS responds a service traffic information report start response to the PGW.

In step S1211, the PGW responds a new network access success response to the UE; and at this time, the network selection in the network congestion condition has been completed according to the made policy.

In step S1212, the terminal performs data transmission, and the PGW periodically reports the user service information to the NSAS.

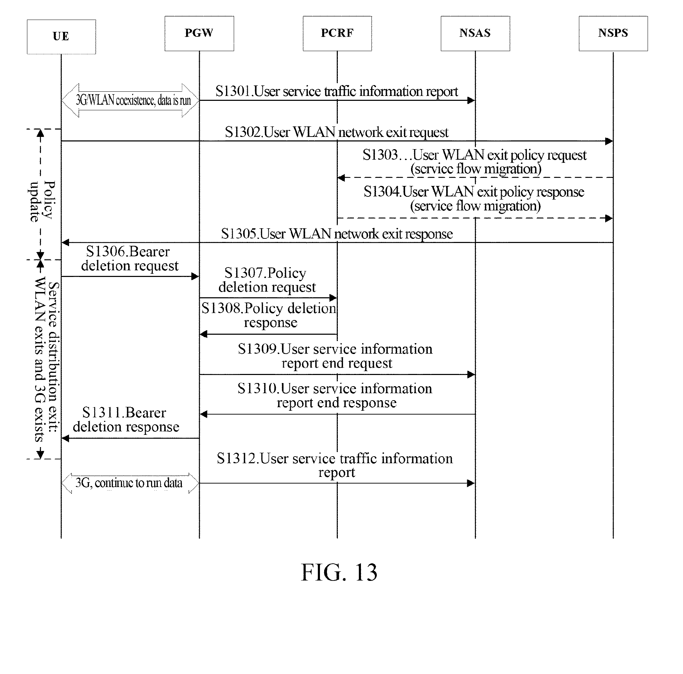

FIG. 13 shows a schematic diagram of performing releasing after the UE performs network handover and distribution, and a 3G+WLAN converged network is taken as an example in FIG. 13. The UE entering and exiting a WLAN signal range causes the network handover/distribution. A process of the UE separately accessing one of the 3G network/WLAN networks is also contained in the flow, which will not be described separately.

The UE simultaneously accesses the 3G/WLAN networks, and runs services normally; when the UE detects that a WLAN signal attenuates to a certain threshold, a network handover/distribution processing process is triggered, a request for exiting the WLAN signal range is sent to the PGW, and the request is reported through a WLAN link. In a special case, the UE judges that it is required to exit the WLAN signal range before a WLAN network exit request is sent to the PGW, and at this time, the UE should report the WLAN exit condition through a 3G link, so as to guarantee that the UE/core network policy states are consistent.

Specific descriptions will be made in combination with FIG. 13 below, and the scheme includes the following steps.

In step S1301, a UE simultaneously accesses 3G/WLAN networks, and runs services normally.

In step S1302, the UE detects that a WLAN signal attenuates, and requests an NSPS for a WLAN disconnection policy change; and if it is a service distribution policy currently, step S1303 is executed in next step, and if it is network handover, step S1305 is executed.

In step S1303, the NSPS initiates a user WLAN network disconnection policy request to a PCRF.

In step S1304, the PCRF replies a user WLAN network disconnection policy response to the NSPS.

In step S1305, the NSPS replies a WLAN disconnection policy response to the UE, and at this time, the policy change has been completed.

In step S1306, the UE initiates a WLAN related bearer deletion request to a PGW.

In step S1307, the PGW initiates a WLAN disconnection policy request to the PCRF.

In step S1308, the PGW replies a WLAN disconnection policy response to the UE.

In step S1309, the PGW initiates a user WLAN network disconnection service end request to an NSAS.

In step S1310, the NSAS replies a PGW user WLAN network disconnection service end response to the PGW.

In step S1311, the PGW replies a bearer deletion success response to the UE; and at this time, the changed new policy has been executed.

In step S1312, the UE continues to run data in the 3G network, and periodically reports the user service information to the NSAS.

The above description is only the preferable embodiments of the present invention, which is not used to limit the present invention. The present invention can have various modifications and changes for the skilled in the art. All the modifications, equivalent substitutions, and improvements, etc. made within the spirit and principle of the present invention shall fall into the protection scope of the present invention.

### Industrial Applicability

As can be seen from the above descriptions, in the embodiments of the present invention, when the terminal performs access network selection, firstly the current network state is acquired, and a corresponding network selection policy is made according to information of the network state. By such means of controlling the access network selection of the terminal according to the current network state, it enables a terminal user to obtain a preferable network in the access network selection, which effectively solves the problem in the related art that optimized access network selection for the terminal cannot be performed, makes the terminal obtain the high-quality network, increases the service processing speed of the terminal, and improves the experience of the terminal user.

## Claims

1. A method for a User Equipment (UE) selecting an access network, comprising:
a Network Selection Policy analysis System (NSPS) determining a network selection policy according to a current network state; and
the NSPS sending the determined network selection policy to the UE, so as to notify the UE to perform access network selection according to the network selection policy.

2. The method according to claim 1, wherein, the NSPS determining the network selection policy according to the current network state comprises:
the NSPS receiving a network selection policy request sent by the UE;
the NSPS determining a corresponding processing policy according to the received network selection policy request, wherein, the processing policy comprises a first processing policy and/or a second processing policy, the first processing policy is used for indicating the UE to perform network handover, and the second processing policy is used for indicating the UE to perform service flow migration; and
the NSPS determining a corresponding network selection policy according to the determined processing policy.

3. The method according to claim 2, wherein, the network selection policy request sent by the UE comprises network information of a location in which the UE is located currently, and when the processing policy is the first processing policy, the NSPS determining the corresponding network selection policy according to the determined processing policy comprises:
the NSPS acquiring the network information of the location in which the UE is located in the network selection policy request;
the NSPS acquiring current running states of various networks from a Network State Analysis System (NSAS);
the NSPS generating an available network location list according to the acquired network information of the location in which the UE is located and the running states of various networks, wherein, the available network location list contains information of networks available to the UE currently; and
the NSPS sending the generated available network location list to the UE, so as to notify the UE to perform access network selection according to the available network location list.

4. The method according to claim 2, wherein, the network selection policy request sent by the UE comprises network information of a location in which the UE is located currently and identity information of the UE, and when the processing policy is the second processing policy, the NSPS determining the network selection policy according to the determined processing policy comprises:
the NSPS acquiring the network information of the current location of the UE and the identity information of the UE in the network selection policy request;
the NSPS acquiring current running states of various networks from an NSAS;
the NSPS sending the acquired network information of the location in which the UE is located, the identity information of the UE and the running states of various networks to a Policy and Charging Rules Function (PCRF) server, so as to acquire a corresponding network selection policy, wherein, according to the network information of the current location of the UE, the identity information of the UE, the running states of various networks and Quality of Service (Qos) information corresponding to the identity information of the UE, the PCRF server generates a network selection policy for controlling the UE to perform service flow migration, and returns the generated network selection policy to the NSPS; and
the NSPS receiving the network selection policy sent by the PCRF server, and sending the received network selection policy to the UE, so as to notify the UE to perform data service flow migration according to the network selection policy.

5. The method according to claim 4, wherein, in a process of the UE performing service flow migration, links of uplink and downlink service flows keep consistent.

6. The method according to claim 2, 4 or 5, wherein, after notifying the UE to perform data service flow migration according to the network selection policy, the method further comprises:
the NSPS receiving a request sent by the UE for exiting one or more of networks in which the UE is located currently; and
in response to the request, the NSPS deleting policies corresponding to the one or more networks in which the UE is located currently, and controlling the UE to exit said one or more of the networks in which the UE is located currently.

7. The method according to any one of claims 1 to 5, wherein, after the NSPS sends the determined network selection policy to the UE, so as to notify the UE to perform access network selection according to the network selection policy, the method further comprises:
the NSPS receiving actual network access information of the UE reported by the UE according to a predetermined period.

8. The method according to claim 7, wherein, before the NSPS receives the actual network access information of the UE reported by the UE according to the predetermined period, the method further comprises:
the NSPS establishing a user session for storing the received actual network access information of the UE reported by the UE according to the predetermined period, and performing updating according to the reporting of the UE.

9. The method according to claim 8, wherein, after the NSPS receives the actual network access information of the UE reported by the UE according to the predetermined period, the method further comprises:
the NSPS judging whether network congestion occurs according to judgment information, wherein, the judgment information comprises at least one of: the received actual network access information of the UE reported by the UE, the running states of various networks acquired from the NSAS, and the Qos information corresponding to the identity information of the UE;
upon judging that the network congestion occurs, the NSPS triggering the UE to send the network selection policy request to the NSPS; and
the NSPS replying to the network selection policy request, and determining a network selection policy according to a priority of the UE.

10. An apparatus for a User Equipment (UE) selecting an access network, comprising: a Network Selection Policy analysis System (NSPS), configured to: determine a network selection policy according to a current network state, and send the determined network selection policy to the UE, so as to notify the UE to perform access network selection according to the network selection policy.

11. The apparatus according to claim 10, wherein, the NSPS comprises:
a first receiving unit, configured to: receive a network selection policy request sent by the UE;
a first determination unit, configured to: determine a corresponding processing policy according to the network selection policy request received by the first receiving unit, wherein, the processing policy comprises a first processing policy and/or a second processing policy, the first processing policy is used for indicating the UE to perform network handover, and the second processing policy is used for indicating the UE to perform service flow migration; and
a second determination unit, configured to: determine a corresponding network selection policy according to the processing policy determined by the first determination unit.

12. The apparatus according to claim 11, wherein, the network selection policy request sent by the UE comprises network information of a location in which the UE is located currently, and the second determination unit comprises:
a first acquisition module, configured to: when the processing policy determined by the first determination unit is the first processing policy, acquire the network information of the location in which the UE is located in the network selection policy request;
a second acquisition module, configured to: when the processing policy determined by the first determination unit is the first processing policy, acquire current running states of various networks from a Network State Analysis System (NSAS);
a first generation module, configured to: generate an available network location list according to the network information of the location in which the UE is located acquired by the first acquisition module and the running states of various networks acquired by the second acquisition module, wherein, the available network location list contains information of networks available to the UE currently; and
a first sending module, configured to: send the available network location list generated by the first generation module to the UE, so as to notify the UE to perform access network selection according to the available network location list.

13. The apparatus according to claim 11, wherein, the network selection policy request sent by the UE comprises network information of a location in which the UE is located currently and identity information of the UE, and the second determination unit comprises:
a third acquisition module, configured to: when the processing policy determined by the first determination unit is the second processing policy, acquire the network information of the current location of the UE and the identity information of the UE in the network selection policy request;
a fourth acquisition module, configured to: when the processing policy determined by the first determination unit is the second processing policy, acquire current running states of various networks from the NSAS;
a second generation module, configured to: send the network information of the location in which the UE is located and the identity information of the UE acquired by the third acquisition module and the running states of various networks acquired by the fourth acquisition module to a Policy and Charging Rules Function (PCRF) server, so as to generate a corresponding network selection policy, wherein, according to the network information of the current location of the UE, the identity information of the UE, the running states of various networks and Quality of Service (Qos) information corresponding to the identity information of the UE, the PCRF server generates a network selection policy for controlling the UE to perform service flow migration, and returns the generated network selection policy to the NSPS; and
a second sending module, configured to: receive the network selection policy sent by the PCRF server, and send the received network selection policy to the UE, so as to notify the UE to perform data service flow migration according to the network selection policy.

14. The apparatus according to claim 13, wherein, the NSPS further comprises:
a second receiving unit, configured to: after the second sending module notifies the UE to perform data service flow migration according to the network selection policy, receive a request sent by the UE for exiting one or more of networks in which the UE is located currently; and
a response unit, configured to: in response to the request received by the second receiving unit, delete policies corresponding to the one or more networks in which the UE is located currently, and control the UE to exit said one or more of the networks in which the UE is located currently.

15. The apparatus according to any one of claims 10 to 14, wherein, the NSPS further comprises:
a third receiving unit, configured to: after the NSPS notifies the UE to perform access network selection according to the network selection policy, receive actual network access information of the UE reported by the UE according to a predetermined period.

16. The apparatus according to claim 15, wherein, the NSPS further comprises:
an establishment unit, configured to: before the third receiving unit receives the actual network access information of the UE reported by the UE according to the predetermined period, establish a user session for storing the received actual network access information of the UE reported by the UE according to the predetermined period, and perform updating according to the reporting of the UE.

17. The apparatus according to claim 16, wherein, the NSPS further comprises:
a judgment unit, configured to: after the third receiving unit receives the actual network access information of the UE reported by the UE according to the predetermined period, judge whether network congestion occurs according to judgment information, wherein, the judgment information comprises at least one of: the received actual network access information of the UE reported by the UE, the running states of various networks acquired from the NSAS, and the Qos information corresponding to the identity information of the UE;
a triggering unit, configured to: when the judgment unit judges that the network congestion occurs, trigger the UE to send the network selection policy request to the NSPS; and
a third determination unit, configured to: reply to the network selection policy request triggered by the triggering unit, and determine a network selection policy according to a priority of the UE.

18. A User Equipment (UE), comprising:
a fourth receiving unit, configured to: receive a network selection policy sent by a Network Selection Policy analysis System (NSPS), wherein, the NSPS determines the network selection policy according to a current network state, and the network selection policy comprises at least one of: a policy of controlling the UE to perform network handover and a policy of controlling the UE to execute service flow migration; and
a first execution unit, configured to: execute the network selection policy received by the fourth receiving unit.

19. The UE according to claim 18, further comprising:
a first sending unit, configured to: send a network selection policy request to the NSPS, so as to trigger the network selection policy sent by the NSPS, wherein, the network selection policy request comprises: network information of a location in which the UE is located currently and identity information of the UE.

20. The UE according to claim 19, wherein,
the fourth receiving unit comprises:
a first receiving module, configured to: receive an available network location list sent by the NSPS, wherein, the available network location list is an available network location list generated by the NSPS according to the acquired network information of the location in which the UE is located and running states of various networks, and the available network location list contains information of networks available to the UE currently; and
the first execution unit comprises:
a first execution module, configured to: perform network handover according to the network location list acquired by the first receiving module.

21. The UE according to any one of claims 18 to 20, wherein,
the fourth receiving unit comprises:
a second receiving module, configured to: receive a network selection policy for controlling the UE to perform data service flow migration sent by the NSPS; and
the first execution unit comprises:
a second execution module, configured to: perform data service flow migration according to the network selection policy acquired by the second receiving module.

22. The UE according to claim 21, further comprising:
a second sending unit, configured to: send a request of exiting one or more networks in which the UE is located currently; and
an exit unit, configured to: exit said one or more networks in which the UE is located currently.

23. The UE according to claim 22, further comprising:
an information reporting unit, configured to: report actual network access information of the UE according to a predetermined period.

24. A system for a User Equipment (UE) selecting an access network, comprising: a Packet data network Gateway (PGW), a Policy and Charging Rules Function (PCRF) server, a Network State Analysis System (NSAS), the apparatus for the UE selecting the access network according to any one of claims 10 to 17 and the UE according to any one of claims 18 to 23, wherein,
the PGW is configured to: in cooperation with the UE and the NSPS respectively, complete data interaction between the UE and an NSPS; the PCRF server is connected with the PGW; the NSPS is connected with the PCRF server; and the NSAS is connected with the PGW and the NSPS respectively.
